# EUROPÄISCHE PATENTSCHRIFT

(11) **EP 0 340 420 B1**
(45) Veröffentlichungstag und Bekanntmachung des Hinweises auf die Patenterteilung: **27.04.1994**
(21) Anmeldenummer: 89104157.6
(22) Anmeldetag: 09.03.1989
(51) Int. Cl.: G07F 5/18, G07F 7/02, G06F 15/24

(54) **Vorrichtung zur Erfassung einer Gegenstandsentnahme an einer Selbstbedienungseinheit**
Article removing detector device for a self-service unit
Dispositif détecteur de retrait d'article dans un appareil de distribution à accès manuel libre

(30) Priorität: 21.04.1988 CH 1495/88
(43) Veröffentlichungstag der Anmeldung: 08.11.1989
(73) Patentinhaber: WMF Hogatron AG, CH-3076 Worb (CH)
(72) Erfinder: Allemann, Peter, CH-3123 Belp (CH)
(74) Vertreter: Troesch, Jacques J., Dr. sc. nat.

(56) Entgegenhaltungen:
- DE-A- 2 751 066
- GB-A- 1 536 533
- GB-A- 2 071 384
- GB-A- 2 180 527
- US-A- 3 884 386

## Beschreibung

Die vorliegende Erfindung betrifft eine Vorrichtung zur Erfassung einer Gegenstandsentnahme an einer Selbstbedienungseinheit, eine Selbstbedienungsanlage mit einer Vorrichtung, eine Zimmerbar für Hotelleriebetriebe mit einer Vorrichtung, eine Flaschenvitrine bzw. Buffetanlage für Gastgewerbebetriebe, eine Vitrine oder Schublade, und weiter ein Verfahren zur Erfassung der Entnahme eines Gegenstandes an einer Selbstbedienungseinheit.

Bei Selbstbedienungsanlagen, wie beispielsweise Flaschenvitrinen oder Buffetanlagen im Gastgewerbe für die Kellnerselbstbedienung, Zimmerbars in Hotelzimmern, Getränkeautomaten in Kantinen usw. besteht das Problem der Entnahmekontrolle und der Verrechnung der entnommenen Artikel.

Bei Flaschenvitrinen im Gastgewerbe werden grösstenteils die Getränkeflaschen vom Kellner erst entnommen, wenn der zu entnehmende Artikel vorab in der Registrierkasse eingetippt worden ist. Der so erhaltene Kassenzettel, welcher Artikel, Preis, Kellnercode oder eventuell Tischnummer enthält, muss nun irgendwo abgelegt werden, wo er jederzeit griffbereit ist. Oft werden diese Kassenzettel vertauscht oder gehen verloren, und zudem ist das Vorabeintippen sehr zeitintensiv.

Eine andere Möglichkeit besteht darin, dass eine Kontrollperson, z.B. eine Buffetdame, die Getränkeflaschen der Vitrine entnimmt und dem Kellner abgibt. Die Kontrolle ist auf diese Art wohl besser, dafür aber wird eine zusätzliche Person benötigt, was Lohnkosten verursacht.

Eine weitere Möglichkeit besteht darin, dass in der Vitrine ein Münzautomat eingebaut wird, wobei die Entnahme der Getränkeflasche nur nach Eingabe eines bestimmten Betrages möglich ist. Wiederum ist die Kontrolle besser, aber der Zeit- und Arbeitsaufwand ist erheblich und einem Kellner in einer gutgehenden Gaststätte wohl kaum zumutbar.

Eine ähnliche Problematik ergibt sich auch bei Zimmerbars, welche sich zunehmender Beliebtheit in Hotelbetrieben erfreuen. Die Aussagen von Gästen und von Kontrollpersonen betreffend der entnommenen Getränke stehen sich oft entgegen. Zudem kann der Gast seine Rechnung erst nach Kontrolle der Zimmerbar durch die Kontrollperson begleichen.

Bei Getränkeautomaten, beispielsweise in Kantinen oder in Sportanlagen, können nur bei exakt eingegebenen Münzbeträgen die gewünschten Getränke ausgelöst werden.

Der Probleme sind noch viele mehr, welche bei der Kontrolle von Warenentnahmen bei Selbstbedienungsanlagen ganz generell und der Verrechnung der entnommenen Waren entstehen.

In der GB-A-1 536 533 wird ein Entnahmeüberwachungs- und Registriersystem bei Verkaufsautomaten beschrieben, wo nicht für jede Entnahme ein Geldstück einzuwerfen ist, wie z.B. bei einer Bar in einem Hotelzimmer. Dabei ist im Verkaufsautomaten für jeden Artikel ein Impuls pro Artikelstelle vorgesehen, der anzeigt, ob der Artikel anwesend oder entfernt worden ist, was einer Entnahmeüberwachung gleich kommt. Waren entnehmen können im Prinzip alle Personen, die in das entsprechende Hotelzimmer gelangen können, womit eine Entnahmezuordnung an eine bestimmte Person nur bedingt möglich ist. Die in dieser Patentschrift beschriebene Zimmerbar kann zusätzlich beispielsweise von Angestellten mittels eines zweiten Verriegelungsorganes geöffnet werden, um die Zimmerbar zu reinigen und das Sortiment wieder zu ergänzen.

In der GB-A- 2 180 527 wird ein Verkaufsautomat beschrieben, wo ein Benutzer mittels eines vom Automaten zu identifizierenden Codes waren entnehmen kann. Der Benutzer hat am Automaten einzugeben, welche Ware er zu entnehmen gedenkt. Auch umfasst der Automat eine Sperre, dass von einer bestimmten Kategorie von Waren jeweils immer nur ein Artikel entnommen werden kann. Der Verkaufsautomat ist also nicht für das wiederholte Entnehmen gleichartiger Waren geeignet.

In der D-A-27 51 066 wird ein Abbuchungsverfahren, resp. eine Anordnung für die Buchführung in einer Lagerhaltung oder zum Sortieren von Waren durch eine oder mehrere Bedienungspersonen beschrieben. Die Anordnung eignet sich für komplizierte Lagerbuchhaltungen, ist aber wenig geeignet für Bedürfnisse im Gastgewerbe.

In der US-PS-3 884 386 wird ein Entnahmeregistrier-Automat beschrieben, wo der Automat für die Entnahme der Ware mittels eines Schlüssels geöffnet werden muss. Der Automat sieht im übrigen mehrere unterteilte Segmente vor, wobei jedes Segment einzeln mit einem entsprechenden Schlüssel geöffnet werden kann. Zudem ist die Möglichkeit des Kühlens im Automaten vorgesehen.

In der GB-A-2 071 384 schlussendlich ist ein Verkaufsautomat, wie beispielsweise eine Bar in einem Hotelzimmer, beschrieben. Diese Hotelbar ist nur mit einem Schlüssel, wie beispielsweise dem Zimmerschlüssel entriegelbar. Eine Warenentnahme wird dann automatisch demjenigen Zimmer, resp. dem entsprechenden Gast zugeschrieben, in dessen Zimmer die Bar steht. Die beschriebene Hotelzimmerbar eignet sich also nur für diesen spezifischen Fall, wo nur eine Person Waren entnimmt und entsprechend jede Warenentnahme immer derselben Person zugeschrieben wird.

Alle die oben beschriebenen bekannten Vorrichtungen eignen sich aber in keiner Weise für beispielsweise Flaschenvitrinen im Gastgewerbe, wo sich mehrere Kellner an derselben bedienen.

Der vorliegenden Erfindung liegt daher die Aufgabe zugrunde, eine Vorrichtung, resp. ein Kontrollsystem zu schaffen, durch welche die Warenentnahme in einer Selbstbedienungsanlage erfasst wird, die Warenentnahme einer bestimmten Person von einem zulässigen Personenkreis zugeordnet wird, und der daraus resultierende Rechnungsbetrag spezifisch dieser bestimmten Entnahmeperson zugeordnet bzw. belastet wird, ohne die oben erwähnten Nachteile und Probleme.

Erfindungsgemäss wird diese Aufgabe durch eine Vorrichtung gemäss dem Wortlaut nach Anspruch 1 resp. durch ein Verfahren gemäss dem Wortlaut nach Anspruch 15 gelöst.

Dabei wird vorgeschlagen, dass an einer Selbstbedienungseinheit, welche zu entnehmende Gegenstände enthält, mindestens eine Verriegelung vorgesehen ist, welche nur mittels eines Codes entriegelt werden kann, und dass weiter mindestens ein Impulsgeber angeordnet ist, welcher bei Entnahme eines Gegenstandes mindestens einen Impuls an eine Registriereinheit abgibt, wo die Entnahme des Gegenstandes registriert wird. Dabei ist es wesentlich, dass die Verriegelung nur mittels eines einer bestimmten Person zugeordneten Codes entriegelbar ist, resp. die Selbstbedienungsanlage benützt werden kann, und dass an der Registriereinheit, wo die Warenentnahme durch den Impulsgeber angezeigt wird, die Entnahme aufgrund des Entriegelungscodes der Person zugeordnet wird.

Weiter wird vorgeschlagen, dass die Verriegelung einen Signalgeber umfasst, welcher beim Entriegeln den zur Entriegelung verwendeten Code als Signal an die Registriereinheit abgibt. Dadurch wird ermöglicht, dass nicht vorab der Benützung einer Selbstbedienungseinheit die Benützerperson oder diejenige Person, welche die Warenentnahme begleicht, eingegeben werden muss. Die Registrierung des zur Entriegelung verwendeten Codes erfolgt somit automatisch.

Die Verriegelung kann dabei elektromechanisch sein, und der zur Entriegelung verwendete Code kann ein Zahlencode sein, welcher mittels einer Tastatur eingegeben werden kann, oder aber die Entriegelung kann mittels eines Schlüssels erfolgen.

In einer bevorzugten Ausführungsvariante wird vorgeschlagen, dass die ganze Selbstbedienungsanlage durch eine einzige Verriegelung gesichert ist.

Je nach Art der Selbstbedienungsanlage ist es aber auch möglich, dass die einzelnen Warenartikel je durch eine eigene Verriegelung gesichert sind.

Der Impulsgeber zur Anzeige der Warenentnahme kann beispielsweise ein Mikroschalter sein.

Um ein sauberes Trennen von Warenentnahme und Wiederauffüllen der Selbstbedienungsanlage zu garantieren, wird weiter vorgeschlagen, dass jeder Impulsgeber nur eine Gegenstandsentnahme anzeigen kann. Vor einer Wiederauffüllung der Selbstbedienungsanlage, respektive vor einer erneuten Entnahme eines weiteren Gegenstandes, muss durch ein Rückstellmittel, wie ein Reset-Schlüssel, oder durch manuelle Betätigung die erneute Anzeigemöglichkeit des Impulsgebers, respektive aller Impulsgeber der Selbstbedienungsanlage erzeugt werden.

Es wird weiter vorgeschlagen, dass die Registriereinheit mindestens eine Prozessorsteuerung und mindestens einen Rechnungscomputer, wie eine elektronische Registrierkasse, umfasst.

Die Prozessorsteuerung umfasst dabei abgespeicherte Informationen, welche den einzelnen Impulsen der Impulsgeber sowie den zur Entriegelung verwendeten Codes entsprechen. Diese Informationen, wie Artikelbezeichnung, Preis des Artikels, Name des Benützers, Name des Kontoinhabers usw., werden an den Rechnungscomputer übertragen, wo die endgültige Registrierung, respektive Erstellung der Rechnung erfolgt.

Die vorab beschriebenen Vorrichtungen eignen sich für jedwelche Art von Selbstbedienungsanlagen.

Insbesondere eignen sich die Vorrichtungen für Zimmerbars in Hotelleriebetrieben, welche in den einzelnen Zimmern aufgestellt sind und durch die Gäste benützt werden können.

Weiter eignen sich die Vorrichtungen in Flaschenvitrinen bzw. Buffetanlagen, welche im Gastgewerbe häufig verwendet werden.

Eine derartige Flaschenvitrine oder Buffetanlage zur Selbstbedienung durch eine Bedienungsperson, beispielsweise einem Kellner, zeichnet sich dadurch aus, dass die Vitrine, respektive die Buffetschublade, elektromagnetisch verriegelbar ist und nur bei Erkennung eines Kellnercodes oder Schlüssels geöffnet werden kann. Die Vitrinen oder Buffetschubladen umfassen Flaschenregale mit Löchern und Schalttellern, welche zur Aufnahme der Flasche vorgesehen sind. Unter den Schalttellern ist je ein Mikroschalter angeordnet, welcher durch Federwirkung gegen den Schaltteller gedrückt wird und bei Flaschenentnahme den Schaltteller nach oben wegdrückt. Gleichzeitig wird ein Impuls ausgelöst, welcher an eine weiter vorgesehene Prozessorsteuerung abgegeben wird. Diese Prozessorsteuerung kann entweder direkt an der Vitrine angeordnet sein oder aber mit der Vitrine verbunden in eine nahe angeordnete Registrierkasse eingebaut sein. Aufgrund des erhaltenen Impulses und des ebenfalls übermittelten Entriegelungscodes gibt die Prozessorsteuerung entsprechende Informationen an einen Rechnungscomputer, wie beispielsweise eine elektronische Registrierkasse, ab, wo nun die Verrechnung erfolgen kann.

Weiter wird vorgeschlagen, dass die Vitrine oder Schublade eine Wiederauffüllsperre umfasst, wodurch die Vitrine oder Schublade sowie die Prozessorsteuerung erst nach Lösen dieser Sperre, beispielsweise durch einen Reset-Schlüssel, wieder aufgefüllt, respektive neu abgespeichert werden können. Dadurch werden Auffüll- und Entnahmevorgang in der Selbstbedienungsanlage, respektive der Vitrine oder der Schublade, scharf getrennt.

Weiter wird ein Verfahren zur Erfassung der Entnahme eines Gegenstandes an einer Selbstbedienungseinheit vorgeschlagen, wobei eine Verriegelung an der Selbstbedienungseinheit mittels eines Codes entriegelt werden muss, um den Gegenstand entnehmen zu können und wobei bei der Entnahme des Gegenstandes ein Impulsgeber betätigt wird, wodurch mindestens ein Impuls an eine Registriereinheit übertragen wird, wo die Entnahme des Gegenstandes registriert wird.

Weiter wird vorgeschlagen, dass der bei der Entriegelung verwendete Code einer bestimmten Person oder einem bestimmten Konto zugeordnet wird und bei Entriegelung an die Registriereinheit übertragen wird, und dass bei der Entnahme der Ware durch Betätigung eines Mikroschalters automatisch ein Impuls an die Registriereinheit übertragen wird, wo die Entnahme der Ware registriert wird und der Person oder dem Konto aufgrund des bei der Entriegelung übertragenen Codes zugeordnet, respektive belastet wird.

Insbesondere wird ein Verfahren zur Erfassung der Flaschenentnahme in einer Selbstbedienungsflaschenvitrine oder einer Buffetanlage in Gastgewerbebetrieben durch eine Bedienungsperson, wie beispielsweise einem Kellner, vorgeschlagen, das die folgenden Schritte umfasst:
- Entriegelung der Vitrinentüre respektive Schublade der Buffetanlage mittels eines von der Verriegelung erkannten Codes oder Schlüssels, welcher durch die Bedienungsperson eingegeben oder betätigt wird,
- Entnehmen einer Flasche durch die Bedienungsperson, wobei gleichzeitig ein Mikroschalter durch das Abheben der Flasche betätigt wird,
- Uebertragung des zur Entriegelung verwendeten Codes und des vom Mikroschalter erzeugten Impulses an eine Prozessorsteuerung, wo mittels abgespeicherter Daten sowohl der Code als auch der Impuls identifiziert werden, sowie
- Registrieren, Verrechnen oder Belasten der entnommenen Flasche an die durch den Code identifizierte Person oder an das Konto.

Weiter wird vorgeschlagen, dass ein zur Verriegelung verwendeter Code erst dann in der Prozessorsteuerung wieder gelöscht wird, respektive die Uebermittlung des Codes an die Prozessorsteuerung erst dann unterbrochen wird, wenn die Anlage wieder verriegelt ist. Der unverriegelte Zustand der Anlage wird vorzugsweise durch eine gut sichtbare Anzeige visualisiert.

Im Falle eines Stromunterbruches wird weiter vorgeschlagen, dass die Prozessoreinheit derart programmiert ist, dass sie automatisch den Flaschenbestand vor und nach dem Stromunterbruch vergleicht und allfällige Differenzen anzeigt.

Vorzugsweise wird weiter vorgeschlagen, dass ein optisches oder akustisches Alarmzeichen ausgelöst wird, wenn die Anlage durch äussere Gewaltanwendung entriegelt wird, ohne dass ein zugelassener Code verwendet wird.

Die vorab beschriebenen Verfahren eignen sich insbesondere für die Erfassung der Lagerbestände von Waren in Selbstbedienungsanlagen. Insbesondere eignen sie sich zur Erfassung der Flaschenbestände in Flaschenvitrinen und/oder Buffetanlagen in Gastgewerbebetrieben.

Im weiteren eignen sich die Verfahren zum Erfassen des Verkaufserlöses, wie beispielsweise des Bruttoumsatzes, in Betrieben mit einer oder mehreren Selbstbedienungsanlagen.

Die vorab beschriebenen Vorrichtungen und Verfahren eignen sich ganz generell zur Entnahme - Kontrolle von Waren in Selbstbedienungsanlagen und ermöglichen ein unverzügliches Zuordnen der Warenentnahme an eine Person oder an eine x-beliebige Stelle.

Die Erfindung wird nun anhand der beispielsweisen Verwendung in einer Selbstbedienungsflaschenvitrine, respektive Buffetanlage, wie sie im Gastgewerbe verwendet werden, unter Bezug auf Figuren näher erläutert.

Dabei zeigen:
- Fig. 1: eine erfindungsgemässe Flaschenvitrine in Frontperspektive,
- Fig. 2: eine erfindungsgemässe Buffetanlage mit Auszugsschubladen in Frontperspektive,
- Fig. 3: einen Schnitt durch ein erfindungsgemässes Flaschenregal, wie es in den Beispielen von Fig. 1 und 2 verwendet wird, und
- Fig. 4: die Obenansicht des Flaschenregals gemäss Fig. 3, integriert in ein Schaltschema für das Flaschenentnahmekontrollsystem.

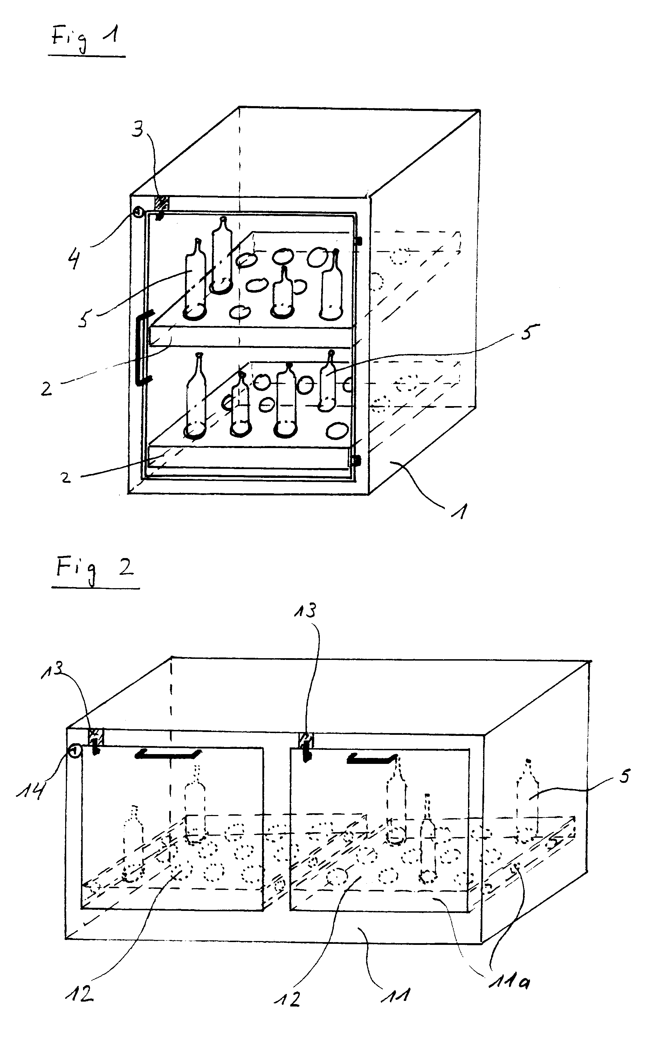

In Fig. 1 dargestellt ist eine kontrollierte Selbstbedienungsflaschenvitrine, wie sie sich insbesondere für die Verwendung im Gastgewerbe, speziell in Restaurationsbetrieben, eignet, an welcher sich beispielsweise ein Kellner oder eine Bedienungsperson selbst kontrolliert bedienen kann.

Die Flaschenvitrine 1 besteht zunächst aus Gehäusekasten und Vitrinentür mit Scharnieren und Türgriff. Im Innern der Vitrine angeordnet sind die Flaschenregale - oder -register 2 -, in welche sich die Flaschen 5 einordnen lassen. Weiter sichtbar sind die automatische Verriegelung 3, durch welche die Vitrinentür verriegelt wird, sowie ein Schloss 4 für die Oeffnung der Verriegelung 3 mittels beispielsweise eines codifizierten Schlüssels, dessen Code einer bestimmten Person, wie beispielsweise einem Kellner, oder einer Kontostelle, lautend beispielsweise auf eine interne Abteilung oder eine Firma, zugeordnet ist. Anstelle eines Schlosses 4 kann aber auch eine Zahlentastatur oder eine Karteneingabeeinheit angeordnet werden, um den Code einzugeben, respektive zu identifizieren, und die Entriegelung zu ermöglichen.

In Fig. 2 ist in analoger Weise eine Buffetanlage 11 mit zwei in Frontrichtung ausziehbaren Schubladen 11a dargestellt. In den Schubladen 11a sind wiederum je ein Regal 12 für die Flaschenaufnahme angeordnet. Die Anlage ist durch die Verriegelung 13 zusammen mit dem Schloss 14 gesichert.

Fig. 3 zeigt einen Schnitt durch ein Flaschenregal, wie in der Flaschenvitrine 1 respektive in der Buffetanlage 11 gemäss Fig. 1 und 2 verwendet. Auf einem sogenannten Tellerhalter 31 angeordnet sind Mikroschalter 32 und Flaschenschaltteller 33, wobei letztere als Auflagefläche für je eine Flasche 35 dienen. Die Schaltteller 33 sind federgelagert angeordnet und lassen sich vertikal bewegen. Die Mikroschalter 32 drücken unter Federeinwirkung gegen die Schaltteller 33. Weiter angeordnet ist ein Flaschenführungsgehäuse 34, welches lochförmige Aussparungen zur Aufnahme der Flaschen 35 aufweist.

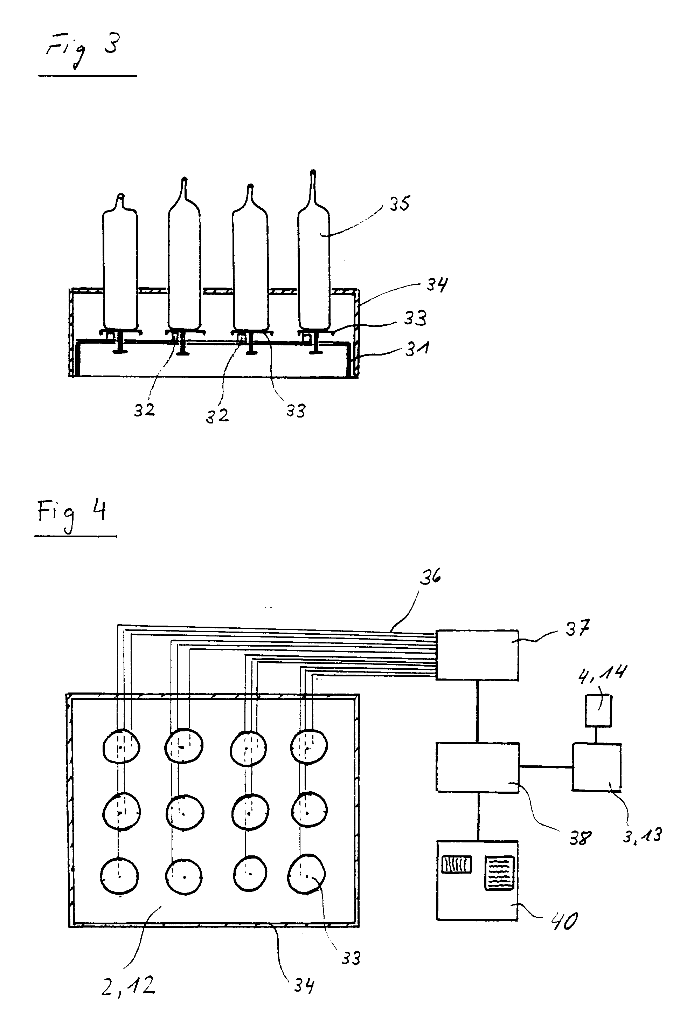

Fig. 4 zeigt das Flaschenregal gemäss Fig. 3 ohne Flaschen von oben, wobei im Führungsgehäuse 34 in den lochförmigen Aussparungen für die Flaschen die Schaltteller 33 sichtbar werden. Weiter in Fig. 4 schematisch dargestellt ist das Schaltsystem für das Flaschenentnahmekontrollsystem. Dabei ist jeder Mikroschalter, welcher in Figur 4 nicht sichtbar unter jedem Schaltteller 33 angeordnet ist, mit einem Sammelprint 37 in einer Prozessorsteuerung verbunden. Der Sammelprint 37 ist weiter mit einem Hauptprint 38, ebenfalls zur Prozessorsteuerung gehörend, verbunden, welcher weiter mit der Verriegelung 3, 13 und dem Schloss 4, 14 verbunden ist. An den Sammelprint 38 angeschlossen ist ein Rechnungscomputer 40, welcher beispielsweise eine elektronische Registrierkasse sein kann.

Die Prozessorsteuerung kann entweder an der Vitrine oder der Buffetanlage angeordnet sein oder aber davon entfernt am Rechnungscomputer.

In der Folge wird nun die Funktionsweise des Kontrollsystems in bezug auf alle Figuren beschrieben.

Ein Kellner öffnet die Verriegelung 3, 13 der Vitrine 1 oder der Buffetanlage 11 durch Drehen seines codifizierten Schlüssels am Schloss 4, 14. Der Schlüsselcode wird an den Hauptprint 38 übertragen und registriert. Falls der Code nicht erkannt wird oder gesperrt ist, lässt sich die Verriegelung 3, 13 nicht entriegeln. Ansonsten öffnet der Kellner die Vitrine 1 oder zieht die Schublade 11a der Buffetanlage 11.

Nun entnimmt der Kellner eine Flasche 5, 35 aus dem Regal 2, 12, wobei durch die Federwirkung des Mikroschalters 32 der entsprechende Schaltteller 33, von welchem die Flasche entnommen wird, nach oben weggedrückt wird. Der Schalter 32 löst einen Impuls aus, welcher von der Prozesssteuerung 37 und 38 registriert wird und mit den für den entsprechenden Platz im Regal abgespeicherten Informationen, wie Artikelbezeichnung, Preis usw., versehen wird. Zusammen mit dem ebenfalls in der Prozesssteuerung vorhandenen Code, der auch eine dafür zugeordnete Information umfasst, wie beispielsweise Name des Kellners, werden die Informationen an den Rechnungscomputer 40 zugeleitet, wo entweder eine Rechnung erstellt wird oder die Mutation einfach abgespeichert wird, um weitere Entnahmen durch denselben Kellner aufaddieren zu können.

Um Verwechslungen, Falschregistrierungen, Fehlmanipulationen usw. zu vermeiden, lassen sich diverse Sicherheitselemente anordnen.

So ist es beispielsweise vorteilhaft, dass an einem einmal nach oben weggedrückten Schaltteller 33 kein Impuls mehr erzeugt werden kann, bevor an der Vitrine oder der Anlage nicht eine Auffüllsperre entriegelt wird. Dies kann beispielsweise durch einen sogenannten Reset-Schlüssel geschehen, der ebenfalls am Schloss 4, 14 gedreht werden kann. Nun kann nach Uebertragung des entsprechenden Reset-Impulses an den Hauptprint 38 sowohl das Regal 2, 12 wie auch die Prozessorsteuerung aufgefüllt, respektive neu abgespeichert werden.

Ein weiteres Sicherheitselement besteht darin, dass ein durch den Kellner mittels Schlüssel eingegebener Code erst gelöscht wird, wenn die Vitrinentüre oder die Schublade 11a und damit die Verriegelung 3, 13 wieder geschlossen ist. Der entriegelte Zustand wird durch eine gut sichtbare Anzeigelampe visualisiert, so dass ein weiterer Kellner, welcher nachfolgt, vor der Entnahme weiss, dass der vorherige Code noch nicht gelöscht ist, und zuerst die Türe, respektive die Schublade, geschlossen werden muss.

Dazu lassen sich x-beliebige weitere Elemente anordnen, wie beispielsweise eine Alarmanzeige beim missbräuchlichen Oeffnen, eine Anzeige für den Fall, dass während eines Stromunterbruches Flaschen aus dem Regal entnommen worden sind, usw.

Interessant aber sind auch die Verwendungs- respektive Anschlussmöglichkeiten des Rechnungscomputers, da mittels des beanspruchten Entnahmekontrollsystems beispielsweise eine Lagerbuchhaltung der Flaschenbestände in mehreren Vitrinen oder Buffetanlagen auf einfache und rasche Weise erstellt werden kann. Auch kann der durch den Verkauf der Flaschen erzielte Bruttoumsatz laufend ermittelt werden. Verrechnungen und Verbuchungen an irgendwelche Gäste, Kunden, Firmenkonten usw. lassen sich unverzüglich laufend durchführen.

Das anhand der Beispiele von Fig. 1 bis 4 beschriebene Flaschenkontrollsystem weist unter anderem die folgenden Vorteile auf:
- genaue Kontrolle der Warenentnahme,
- Zeitersparnis, Rationalisierung,
- keine Kontrollperson nötig,
- genaue Kenntnisse der Lagerbestände,
- aktualisierter Umsatz,
- rasches Verrechnen,usw.

Ein ganz gewichtiger Vorteil dieses Kontrollsystems liegt darin, dass es sich auch in bestehende Flaschenvitrinen oder Buffetanlagen einbauen lässt.

Die Fig. 1 bis 4 zeigen aber nur ein Beispiel des erfindungsgemässen Entnahmekontrollsystems für die Warenentnahme in Selbstbedienungsanlagen. Die diesem System zugrundeliegenden beanspruchten Vorrichtungen und Verfahren lassen sich für jedwelche Art von Selbstbedienungsanlagen verwenden. Sei dies für Zimmerbars in Hotels, für Automaten in Kantinen und Sportanlagen, oder sei dies beispielsweise auch für ein Warenlager in einem Betrieb, aus welchem sich diverse interne Stellen selbst bedienen können.

Ganz allgemein kann gesagt werden, dass überall dort, wo die Selbstbedienung von Waren durch Personen vorgesehen ist, sich das erfindungsgemässe Prinzip zur Entnahmekontrolle eignet.

## Patentansprüche

1. Vorrichtung zum Erfassen einer Warenentnahme an einer von mehreren Personen benutzbaren und für wiederholte Entnahme vorgesehenen, verriegelbaren Selbstbedienungseinheit und für das Zuordnen der spezifischen Entnahme an eine bestimmte Person, umfassend einen Impulsgeber, welcher bei Entnahme der Ware mindestens einen Impuls an eine Registriereinheit abgibt, wo die Entnahme erfasst und registriert wird, dadurch gekennzeichnet, dass die Verriegelung ein Verriegelungsorgan (3, 13) umfasst, welches mit je einem spezifisch jeder einzelnen der mehreren Personen zugeordneten Codes entriegelbar ist, und der an die Registriereinheit (37, 38, 40) abgegebene Impuls für die Warenentnahme mit dem Verriegelungsorgan (3, 13) derart gekoppelt bzw. verbunden ist, dass die Entnahme dem Code derjenigen bestimmten Person zugeordnet wird, welche die Verriegelung entriegelt hat.

2. Vorrichtung nach Anspruch 1, dadurch gekennzeichnet, dass die Verriegelung bzw. das Verriegelungsorgan (3, 13) weiter einen Signalgeber umfasst, welcher beim Entriegeln den zur Entriegelung verwendeten Code (4, 14) als Signal an die Registriereinheit (37, 38, 40) abgibt.

3. Vorrichtung nach einem der Ansprüche 1 und 2, dadurch gekennzeichnet, dass ein elektromechanisches Verriegelungsorgan (3, 13) vorgesehen ist, welches durch einen Zahlencode oder einen Schlüssel (4, 14) entriegelbar ist.

4. Vorrichtung nach einem der Ansprüche 1 bis 3, dadurch gekennzeichnet, dass eine Verriegelung (3, 13) für die ganze Anlage (1, 11) vorgesehen ist.

5. Vorrichtung nach einem der Ansprüche 1 bis 4, dadurch gekennzeichnet, dass wenigstens teilweise pro Warenartikel (5, 35) je eine Verriegelung vorgesehen ist.

6. Vorrichtung nach einem der Ansprüche 1 bis 5, dadurch gekennzeichnet, dass der Impulsgeber ein Mikroschalter (32) ist, der, bei Warenentnahme betätigt, einen Impuls auslöst.

7. Vorrichtung nach einem der Ansprüche 1 bis 6, dadurch gekennzeichnet, dass der Impulsgeber (32) nur eine Gegenstandsentnahme anzeigt und vor einer erneuten Entnahme eines weiteren Gegenstandes die Anzeigemöglichkeit durch Rückstellmittel, wie einem Reset-Schlüssel, oder durch manuelle Betätigung erzeugt werden muss.

8. Vorrichtung nach einem der Ansprüche 1 bis 7, dadurch gekennzeichnet, dass die Registriereinheit mindestens eine Prozessorsteuerung (37, 38) und mindestens einen Rechnungscomputer (40), wie beispielsweise eine elektronische Registrierkasse, umfasst.

9. Vorrichtung nach einem der Ansprüche 1 bis 8, dadurch gekennzeichnet, dass die Prozessorsteuerung (37, 38) jedem Impuls eines jeden Impulsgebers (32) und jedem Code (4, 14) zugeordnet Informationen umfasst, wie Artikelbezeichnung, Preis des Artikels, Benützername usw., welche an den Rechnungscomputer (40) übertragen werden.

10. Selbstbedienungsanlage mit einer Vorrichtung nach einem der Ansprüche 1-9.

11. Zimmerbar für Hotelleriebetriebe mit einer Vorrichtung nach einem der Ansprüche 1-10.

12. Flaschenvitrine (1) bzw. Buffetanlage (11) für Gastgewerbebetriebe mit einer Vorrichtung nach einem der Ansprüche 1-10.

13. Vitrine (1) oder Buffetanlage (11) nach Anspruch 12, zur Selbstbedienung durch eine Bedienungsperson, wie beispielsweise einem Kellner, in einem Gaststättenbetrieb, dadurch gekennzeichnet,
- dass die Vitrine (1) respektive die Buffetschublade (11) elektromagnetisch verriegelbar ist, welche sich nur bei Erkennung eines Kellnercodes oder -schlüssels (4, 14) öffnen lässt,
- dass in der Vitrine (1) oder der Buffetschublade (11) Flaschenregale (2, 12) mit Löchern und Schalttellern (33) zur Flaschenaufnahme vorgesehen sind, wobei unter dem Schaltteller (33) je ein Mikroschalter (32) angeordnet ist, welcher durch Federwirkung gegen den Schaltteller (33) gedrückt wird und bei Flaschenentnahme den Schaltteller (33) nach oben wegdrückt, wobei gleichzeitig ein Impuls ausgelöst wird,
- dass weiter eine Prozessorsteuerung (37, 38) vorgesehen ist zur Registrierung des Impulses und des zur Entriegelung der Vitrine (1) respektive der Schublade (11) verwendeten Codes oder Schlüssels (4, 14), sowie der Weiterleitung der dem Impuls und dem Code entsprechenden Informationen an einen damit verbunden vorgesehenen Rechnungscomputer (40), wie eine elektronische Registrierkasse, in welchem die Verrechnung erfolgt.

14. Vitrine (1) oder Schublade (11) nach einem der Ansprüche 12 oder 13, dadurch gekennzeichnet, dass eine Wiederauffüllsperre vorgesehen ist, wodurch die Vitrine (1) oder Schublade (11) sowie die Prozessorsteuerung (37, 38) erst nach Lösen dieser Sperre, beispielsweise durch einen Reset-Schlüssel, wieder aufgefüllt resp. neu abgespeichert werden kann.

15. Verfahren zum Erfassen einer Warenentnahme an einer von mehreren Personen benutzbaren und für wiederholte Entnahme vorgesehenen, verriegelbaren Selbstbedienungseinheit und für das Zuordnen der spezifischen Entnahme an eine bestimmte Person, umfassend einen Impulsgeber, welcher bei Entnahme der Ware mindestens einen Impuls an eine Registriereinheit abgibt, wo die Entnahme erfasst und registriert wird, dadurch gekennzeichnet, dass zunächst eine Verriegelung (3, 13) mittels eines Codes (4, 14), welcher spezifisch jeder einzelnen der mehreren Personen zugeordnet ist, entriegelt werden muss, um den Gegenstand (5, 35) entnehmen zu können, und dass weiter bei der Entnahme des Gegenstandes (5, 35) ein Impulsgeber (32) betätigt wird, wodurch mindestens ein Impuls an eine Registriereinheit (37, 38, 40) übertragen wird, wo die Entnahme des Gegenstandes (5, 35) registriert und dem Code, welcher die Verriegelung gelöst hat, zugeordnet wird.

16. Verfahren nach Anspruch 15, zur Erfassung der Warenentnahme in einer Selbstbedienungsanlage (1, 11) und Zuordnung der Entnahme an eine Person oder an ein Konto, dadurch gekennzeichnet, dass die Verriegelung (3, 13) an der Anlage (1, 11) mittels eines der Person oder dem Konto zugeordneten Codes oder Schlüssels (4, 14) entriegelt wird, wobei der zur Entriegelung verwendete Code beim Entriegeln an die Registriereinheit (37, 38, 40) übertragen wird, und dass bei der Entnahme der Ware (5, 35) durch Betätigung eines Mikroschalters (32) automatisch mindestens ein Impuls an die Registriereinheit (37, 38, 40) übertragen wird, wo die Entnahme der Ware (5, 35) registriert wird und der Person oder dem Konto aufgrund des bei der Entriegelung übertragenen Codes zugeordnet respektive belastet wird.

17. Verfahren nach einem der Ansprüche 15 oder 16, zur Erfassung und Kontrolle der Flaschenentnahme an einer Selbstbedienungsflaschenvitrine bzw. Buffetanlage in Gastgewerbebetrieben durch eine Bedienungsperson, wie beispielsweise einem Kellner, gekennzeichnet durch die Schritte
- der Entriegelung der Vitrinentüre, respektive Schublade (11a) der Buffetanlage (11), mittels eines von der Verriegelung erkannten Codes oder Schlüssels (4, 14), welcher durch die Bedienungsperson eingegeben oder betätigt wird,
- des Entnehmens einer Flasche (5, 35) durch die Bedienungsperson, wobei gleichzeitig ein Mikroschalter (32) durch das Abheben der Flasche (5, 35) betätigt wird,
- des Uebertragens des zur Entriegelung verwendeten Codes (4, 14) und des vom Mikroschalter (32) erzeugten Impulses an eine Prozessorsteuerung (37, 38), wo mittels abgespeicherter Daten sowohl der Code als auch der Impuls identifiziert werden, sowie
- des Registrierens, Verrechnens oder Belastens der entnommenen Flasche (5, 35) an die durch den Code identifizierte Person oder Konto.

18. Verfahren nach einem der Ansprüche 16 oder 17, dadurch gekennzeichnet, dass die Codeübertragung des zur Entriegelung verwendeten Codes an die Prozessorsteuerung (37, 38) erst unterbrochen wird, wenn die Vitrine (1), respektive Buffetanlage (11), wieder geschlossen ist, d.h. die Verriegelung (3, 13) wieder verriegelt ist, wobei vorzugsweise durch eine Anzeige angezeigt wird, wenn die Vitrine (1) oder Buffetanlage (11) nicht verriegelt ist.

19. Verfahren nach einem der Ansprüche 17 oder 18, dadurch gekennzeichnet, dass bei einem Stromunterbruch durch die Prozessoreinheit (37, 38) der Flaschenbestand vor und nach dem Stromunterbruch verglichen wird und allfällige Differenzen angezeigt werden.

20. Verfahren nach einem der Ansprüche 17 bis 19, dadurch gekennzeichnet, dass bei erzwungener Entriegelung ohne die Verwendung eines erkannten Codes ein optisches oder akustisches Alarmzeichen ausgelöst wird.

21. Verwendung des Verfahrens nach einem der Ansprüche 15 bis 20, für die Erfassung der Lagerbestände von Waren in Selbstbedienungsanlagen, insbesondere von Flaschenbeständen in Flaschenvitrinen (1) und/oder Buffetanlagen (11).

22. Verwendung des Verfahrens nach einem der Ansprüche 15 bis 20, zur Erfassung des im Betrieb mit Selbstbedienungsanlagen (1, 11) erzielten Verkaufserlöses, wie beispielsweise des Bruttoumsatzes.

## Claims

1. Device for detecting the removal of an article on a lockable self-service unit, which can be used by a plurality of individuals and is designed for repeated removal, and for associating the specific removal with a particular individual, comprising a pulse generator which, when the article is removed, delivers at least one pulse to a recording unit where the removal is detected and recorded, characterised in that the locking mechanism comprises a locking element (3, 13), which can be unlocked by means of a respective code which is specifically associated with each of the individuals, and the pulse for the removal of the article which is delivered to the recording unit (37, 38, 40) is coupled or connected to the locking element (3, 13) such that the removal is associated with the code of the particular individual who has unlocked the locking mechanism.

2. Device according to claim 1, characterised in that the locking mechanism or the locking element (3, 13) also comprises a signal transmitter which, when the locking mechanism is unlocked, delivers the code (4, 14) used for unlocking as a signal to the recording unit (37, 38, 40).

3. Device according to either claim 1 or 2, characterised in that an electromechanical locking element (3, 13) is provided which can be unlocked by a numerical code or a key (4, 14).

4. Device according to one of claims 1 to 3, characterised in that one locking mechanism (3, 13) is provided for the entire facility (1, 11).

5. Device according to one of claims 1 to 4, characterised in that a respective locking mechanism is provided for each article (5, 35), at least in some cases.

6. Device according to one of claims 1 to 5, characterised in that the pulse generator is a microswitch (32) which, being operated when an article is removed, releases a pulse.

7. Device according to one of claims 1 to 6, characterised in that the pulse generator (32) only indicates the removal of one article, and the possibility of an indication must be created by reset means, such as a reset key, or by manual operation before another article can be removed.

8. Device according to one of claims 1 to 7, characterised in that the recording unit comprises at least one processor control unit (37, 38) and at least one calculating computer (40) such as, for example, an electronic cash register.

9. Device according to one of claims 1 to 8, characterised in that the processor control unit (37, 38) comprises information such as description of article, price of article, name of user, etc. which is associated with each pulse of each pulse generator (32) and each code (4, 14) and is transmitted to the calculating computer (40).

10. Self-service facility with a device according to one of claims 1 to 9.

11. Room bar for the hotel trade with a device according to one of claims 1 to 10.

12. Glass drinks cabinet (1) or buffet facility (11) for catering establishments with a device according to one of claims 1 to 10.

13. Glass cabinet (1) or buffet facility (11) according to claim 12 for self-service by an attendant, such as a waiter, for example, in a catering establishment, characterised in
- that the glass cabinet (1) or the buffet drawer (11) can be locked electromagnetically and can only be opened upon recognition of a waiter's code or key (4, 14),
- that bottle shelves (2, 12) with holes and operating plates (33) are provided in the glass cabinet (1) or the buffet drawer (11) to hold the bottles, a respective microswitch (32) being arranged under the operating plate (33), which switch is pressed against the operating plate (33) by spring action and pushes the operating plate (33) away in the upward direction when a bottle is removed, a pulse being simultaneously released,
- that a processor control unit (37, 38) is also provided to record the pulse and the code or key (4, 14) which is used to unlock the glass cabinet (1) or the drawer (11) and to transmit the information corresponding to the pulse and the code to a calculating computer (40), such as an electronic cash register, which is connected to the control unit and in which the charging is carried out.

14. Glass cabinet (1) or drawer (11) according to either claim 12 or 13, characterised in that a refill barrier is provided whereby the glass cabinet (1) or drawer (11) and the processor control unit (37, 38) can only be refilled or store new information, respectively, after this barrier has been released, for example by a reset key.

15. Method for detecting the removal of an article at a lockable self-service unit, which can be used by a plurality of individuals and is designed for repeated removal, and for associating the specific removal with a particular individual, comprising a pulse generator which, when the article is removed, delivers at least one pulse to a recording unit where the removal is detected and recorded, characterised in that a locking mechanism (3, 13) must firstly be unlocked by means of a code (4, 14), which is specifically associated with each of the individuals, in order to be able to remove the article (5, 35), and that a pulse generator (32) is operated when the article (5, 35) is removed, as a result of which at least one pulse is transmitted to a recording unit (37, 38, 40) where the removal of the article (5, 35) is recorded and associated with the code which has released the locking mechanism.

16. Method according to claim 15 for detecting the removal of an article in a self-service facility (1, 11) and associating the removal with an individual or with an account, characterised in that the locking mechanism (3, 13) on the facility (1, 11) is unlocked by means of a code or key (4, 14) associated with the individual or the account, the code which is used for unlocking being transmitted to the recording unit (37, 38, 40) when this takes place, and that when the article (5, 35) is removed at least one pulse is automatically transmitted to the recording unit (37, 38, 40) by operating a microswitch (32), at which unit the removal of the article (5, 35) is recorded and associated with or charged to the individual or the account on the basis of the code which is transmitted during the unlocking operation.

17. Method according to either claim 15 or 16 for detecting and monitoring the removal of bottles at a self-service glass drinks cabinet or buffet facility in catering establishments by an attendant, for example a waiter, characterised by the steps of
- unlocking the glass cabinet doors or the drawer (11a) of the buffet facility (11) by means of a code or key (4, 14) which is recognised by the locking mechanism and entered or operated by the attendant,
- the attendant removing a bottle (5, 35), with a microswitch (32) being simultaneously operated by the bottle (5, 35) being lifted,
- transmitting the code (4, 14) used for unlocking and the pulse produced by the microswitch (32) to a processor control unit (37, 38), where both the code and the pulse are identified by means of stored data, and
- recording and charging the removed bottle (5, 35) to the individual or account identified by the code.

18. Method according to either claim 16 or 17, characterised in that the transmission of the code used for unlocking to the processor control unit (37, 38) is not interrupted until the glass cabinet (1) or buffet facility (11) is closed again, i.e. the locking mechanism (3, 13) is locked again, a display preferably indicating when the glass cabinet (1) or buffet facility (11) is not locked.

19. Method according to either claim 17 or 18, characterised in that if there is an interruption of current the processor unit (37, 38) compares the stock of bottles before and after the interruption of current and any differences are indicated.

20. Method according to one of claims 17 to 19, characterised in that an optical or acoustic alarm signal is triggered if the locking mechanism is unlocked by force without the use of a recognised code.

21. Use of the method according to one of claims 15 to 20 for detecting the stocks of articles in self-service facilities, in particular stocks of bottles in glass drinks cabinets (1) and/or buffet facilities (11).

22. Use of the method according to one of claims 15 to 20 for detecting the sales proceeds, such as the gross sales, for example, obtained when operating self-service facilities (1, 11).

## Revendications

1. Dispositif pour détecter un prélèvement de produit dans une unité à libre-service verrouillable apte à être utilisée par plusieurs personnes et prévue pour des prélèvements répétés, et pour attribuer le prélèvement spécifique à une personne définie, comprenant un émetteur d'impulsions qui, lors du prélèvement du produit, fournit au moins une impulsion à une unité d'enregistrement dans laquelle le prélèvement est détecté et enregistré, caractérisé en ce que le dispositif de verrouillage comprend un organe de verrouillage (3, 13) qui est apte à être déverrouillé à l'aide d'un code attribué spécifiquement à chacune des personnes individuelles, et l'impulsion fournie à l'unité d'enregistrement (37, 38, 40) pour le prélèvement de produit est accouplée ou reliée à l'organe de verrouillage (3, 13) de telle sorte que le prélèvement est attribué au code de la personne définie qui a déverrouillé le dispositif de verrouillage.

2. Dispositif selon la revendication 1, caractérisé en ce que le dispositif de verrouillage ou l'organe de verrouillage (3, 13) comprend également un émetteur de signaux qui, lors du déverrouillage, fournit le code (4, 14) utilisé pour le déverrouillage à l'unité d'enregistrement (37, 38, 40), sous la forme d'un signal.

3. Dispositif selon l'une des revendications 1 et 2, caractérisé en ce qu'il est prévu un organe de verrouillage électromécanique (3, 13) qui est apte à être déverrouillé grâce à un code numérique ou à une clé (4, 14).

4. Dispositif selon l'une des revendications 1 à 3, caractérisé en ce qu'il est prévu un dispositif de verrouillage (3, 13) pour toute l'installation (1, 11).

5. Dispositif selon l'une des revendications 1 à 4, caractérisé en ce qu'il est prévu au moins partiellement un dispositif de verrouillage par article (5, 35).

6. Dispositif selon l'une des revendications 1 à 5, caractérisé en ce que l'émetteur d'impulsions est défini par un microrupteur (32) qui, actionné lors du prélèvement d'un produit, déclenche une impulsion.

7. Dispositif selon l'une des revendications 1 à 6, caractérisé en ce que l'émetteur d'impulsions (32) n'indique qu'un prélèvement d'objet, et avant un prélèvement d'un nouvel objet, la signalisation doit être rendue possible grâce à des moyens de remise à zéro tels qu'une clé de remise à zéro, ou à un actionnement manuel.

8. Dispositif selon l'une des revendications 1 à 7, caractérisé en ce que l'unité d'enregistrement comprend au moins une commande par processeur (37, 38) et au moins un ordinateur de calcul (40) tel qu'une caisse enregistreuse électronique, par exemple.

9. Dispositif selon l'une des revendications 1 à 8, caractérisé en ce que la commande par processeur (37, 38) comprend des informations attribuées à chaque impulsion de chaque émetteur d'impulsions (32) et à chaque code (4, 14), comme la désignation et le prix de l'article, le nom de l'utilisateur, etc, informations qui sont transmises à l'ordinateur de calcul (40).

10. Installation à libre-service comportant un dispositif selon l'une des revendications 1 à 9.

11. Bar pour chambres d'établissements hôteliers, comportant un dispositif selon l'une des revendications 1 à 10.

12. Vitrine pour bouteilles (1) ou installation pour bar (11) pour établissements de la restauration, comportant un dispositif selon l'une des revendications 1 à 10.

13. Vitrine (1) ou installation pour bar (11) selon la revendication 12, pour le libre-service par un utilisateur, par exemple un serveur, dans un établissement de la restauration, caractérisé
- en ce que la vitrine (1) ou le tiroir pour bar (11) est verrouillable par voie électromagnétique et ne peut s'ouvrir que si un code ou une clé de serveur (4, 14) est identifié,
- en ce qu'il est prévu, dans la vitrine (1) ou dans le tiroir pour bar (11), des rayons à bouteilles (2, 12) pourvus de trous et de plateaux de commutation (33) destinés à recevoir des bouteilles, étant précisé qu'il est prévu, sous chaque plateau de commutation (33), un microrupteur (32) qui est pressé contre le plateau de commutation (33) sous une action de ressort, et pousse ledit plateau (33) vers le haut quand une bouteille est prélevée, une impulsion étant déclenchée simultanément,
- en ce qu'il est également prévu une commande par processeur (37, 38) pour l'enregistrement de l'impulsion et du code ou de la clé (4, 14) utilisés pour déverrouiller la vitrine (1) ou le tiroir (11), et pour la transmission des informations correspondant à l'impulsion et au code, à un ordinateur de calcul (40) prévu et relié à ladite commande, tel qu'une caisse enregistreuse électronique, dans lequel a lieu la comptabilisation.

14. Vitrine (1) ou tiroir (11) selon l'une des revendications 12 ou 13, caractérisé en ce qu'il est prévu un dispositif de blocage de remplissage, grâce auquel la vitrine (1) ou le tiroir (11) ne peuvent être remplis et la commande par processeur (37, 38) ne peut être réinitialisée qu'après déblocage de ce dispositif de blocage, par exemple au moyen d'une clé de remise à zéro.

15. Procédé pour détecter un prélèvement de produit dans une unité à libre-service verrouillable apte à être utilisée par plusieurs personnes et prévue pour des prélèvements répétés, et pour attribuer le prélèvement spécifique à une personne définie, comprenant un émetteur d'impulsions qui, lors du prélèvement du produit, fournit au moins une impulsion à une unité d'enregistrement dans laquelle le prélèvement est détecté et enregistré, caractérisé en ce qu'il faut tout d'abord déverrouiller un dispositif de verrouillage (3, 13) à l'aide d'un code (4, 14) qui est attribué spécifiquement à chacune des personnes individuelles, pour pouvoir prélever l'objet (5, 35), et en ce qu'un émetteur d'impulsions (32) est actionné lors du prélèvement de l'objet (5, 35), moyennant quoi au moins une impulsion est transmise à une unité d'enregistrement (37, 38, 40), dans laquelle le prélèvement de l'objet (5, 35) est enregistré et attribué au code qui a débloqué le dispositif de verrouillage.

16. Procédé selon la revendication 15, pour détecter le prélèvement d'un produit dans une installation à libre-service (1, 11) et pour attribuer le prélèvement à une personne ou à un compte, caractérisé en ce que le dispositif de verrouillage (3, 13) prévu sur l'installation (1, 11) est déverrouillé à l'aide d'un code ou d'une clé (4, 14) attribués à la personne ou au compte, moyennant quoi le code utilisé pour le déverrouillage est transmis à l'unité d'enregistrement (37, 38, 40) lors du déverrouillage, et en ce que, lors du prélèvement du produit (5, 35), au moins une impulsion est transmise automatiquement, grâce à l'actionnement d'un microrupteur (32), à l'unité d'enregistrement (37, 38, 40), dans laquelle le prélèvement du produit (5, 35) est enregistré et attribué à la personne ou débité du compte sur la base du code transmis lors du déverrouillage.

17. Procédé selon l'une des revendications 15 ou 16, pour détecter et contrôler le prélèvement de bouteilles par un utilisateur, par exemple un serveur, au niveau d'une vitrine pour bouteilles à libre-service ou d'une installation pour bar dans des établissements de la restauration, caractérisé par les phases
- de déverrouillage de la porte de la vitrine ou du tiroir (11a) de l'installation pour bar (11) à l'aide d'un code ou d'une clé (4, 14) qui sont respectivement entré ou actionnée par l'utilisateur et identifiés par le dispositif de verrouillage,
- de prélèvement d'une bouteille (5, 35) par le serveur, un microrupteur (32) étant actionné simultanément grâce au soulèvement de la bouteille (5, 35),
- de transmission du code (4, 14) utilisé pour le déverrouillage et de l'impulsion produite par le microrupteur (32) à une commande par processeur (37, 38) dans laquelle le code et l'impulsion sont identifiés à l'aide de données mises en mémoire, et
- d'enregistrement, de comptabilisation ou de débit de la bouteille (5, 35) prélevée pour la personne ou le compte identifiés grâce au code.

18. Procédé selon l'une des revendications 16 ou 17, caractérisé en ce que la transmission du code utilisé pour le déverrouillage à la commande par processeur (37, 38) n'est interrompue qu'une fois que la vitrine (1) ou l'installation pour bar (11) est refermée, c'est-à-dire que le dispositif de verrouillage (3, 13) est à nouveau verrouillé, une signalisation étant de préférence mise en marche quand la vitrine (1) ou l'installation pour bar (11) n'est pas verrouillée.

19. Procédé selon l'une des revendications 17 ou 18, caractérisé en ce que, en cas de coupure de courant, les stocks de bouteilles d'avant et d'après la coupure sont comparés par l'unité de processeur (37, 38) et d'éventuelles différences sont indiquées.

20. Procédé selon l'une quelconque des revendications 17 à 19, caractérisé en ce qu'un signal d'alarme optique ou acoustique est déclenché en cas de déverrouillage forcé sans l'utilisation d'un code identifié.

21. Utilisation du procédé selon l'une des revendications 15 à 20, pour détecter les stocks de produits dans des installations à libre-service, notamment des stocks de bouteilles dans des vitrines (1) et/ou des installations pour bars (11).

22. Utilisation du procédé selon l'une des revendications 15 à 20, pour détecter le produit de la vente obtenu dans l'établissement pourvu d'installations à libre-service (1, 11), comme par exemple le chiffre d'affaires brut.
